# EUROPEAN PATENT APPLICATION

(11) **EP 3 381 301 A1**
(43) Date of publication of application: **03.10.2018**
(21) Application number: 17163867.9
(22) Date of filing: 30.03.2017
(51) Int. Cl.: A23L 33/17, A23G 3/44, A21D 2/26, A23L 33/195, A23L 17/60

(54) **METHODS OF PREPARATION OF FOOD PRODUCTS COMPRISING MICROALGAE & PRODUCTS THEREOF**

(71) Applicant: Golden Chlorella SA, 1803 Chardonne (CH)
(72) Inventor: URAN, Mine, 1803 Chardonne (CH)
(74) Representative: reuteler & cie SA

(57) **Abstract**

The present invention relates to a method of preparation of high-protein food products and process for manufacturing a high-protein dry food rehydratable mix comprising high-protein microalgae and high-protein food products comprising microalgae, in particular *Chlorella.*

## Description

### Field of the invention

The present invention relates to a process of preparation of dry food products comprising microalgae and to dry food products derived therefrom.

### Background

According to United Nations estimates, the global population is predicted to triple from 3 billion in 1960 to nearly 9 billion by 2050 and this will increase demand for additional food sources, in particular for proteins. Protein deficiency affects mainly brain and muscle development, but is also associated with significant deteriorations in heart, bone and eye health, and with improper immune system regulation and poor wound healing. Therefore, there is a need for food that provides a high protein source.

One potential source of protein to be incorporated into food is provided by algae (both macro-and micro-algae). There are several species of macroalgae that are used in foodstuffs such as purple laver (*Porphyra*, used in nori), dulse (*Palmaria palmate*) and sea lettuce (*Ulva lactuca*). Microalgae, such as *Spirulina* (*Arthrospira platensis*) are grown commercially in open ponds (photosynthetically) for use as a nutritional supplement or incorporated in small amounts in smoothies or juice drinks. Other microalgae, including some species of *Chlorella,* are popular in Asian countries as a nutritional supplement. Currently, the most used microalgae are the green algae (*Chlorophycea*) *Chlorella vulgaris*, *Haematococcus pluvialis*, *Dunaliella salina* and the cyanobacteria *Spirulina maxima* which are mainly used as nutritional supplements (Priyadarshani et al., 2012, J. Algal Biomass Utln., 3(4): 89-100*).* Despite the fact that several species of microalgae are used in food supplements industry and incorporated in some foodstuffs such as noodles, smoothies and snacks with vitamins and minerals, only few foodstuffs can be found that comprise microalgae. Poor flavour often perceived as a "green" or "fishy" taste and texture, in particular a chewy consistency is one major factor that stops widespread adoption of microalgae in the food applications. It is known that customers would accept green algae powder if it was hidden in already green foods like spinach noodles and mint ice cream.

In particular, production of lipids and carotenoids by *Chlorella protothecoides* has been described as a new generation, single source, nutritionally beneficial, dietary source of lutein and DHA for human ocular health, especially appealing to vegetarians and those interested "all natural" nutrients. Further, in order to remove the non desirable color and taste due to the chlorophylle, a method of growing *Chlorella protothecoides* in a dark environment, to produce a non-green microalgal biomass, which improves the taste and colour of the protein source has been recently developed (WO 2010/045362). However, the incorporation of microalgal protein in dry foods such as different snacks and biscuits and dehydrated food preparations ready for cooking is very difficult because protein tends to aggregate and precipitate which causes a chewiness that increases during the shelf-life of the food product. Therefore, there is a need to produce dry food comprising microalgae, in particular microalgal protein with improved properties in terms of taste and texture.

### Summary of the Invention

An object of this invention is to provide a method of preparation of a high-protein food cooked or baked product comprising microalgae that enables to obtain high-protein food cooked or baked product having a non chewy texture.

It is advantageous to provide baked or cooked food high-protein products comprising microalgae having improved organoleptic properties.

It is advantageous to provide baked or cooked food high-protein products comprising microalgae having increased shelf-life.

Objects of this invention have been achieved by providing a method according to claim 1.

Objects of this invention have been achieved by providing a process according to claim 8.

Objects of this invention have been achieved by providing a food mix according to claim 11.

Objects of this invention have been achieved by providing a food product according to claims 13 or 14.

Objects of this invention have been achieved by providing a meal kit according to claim 12.

Disclosed herein, according to a first aspect of the invention, is a method for production of a high-protein food cooked or baked product comprising microalgae, wherein said method comprises the following steps:
a) Providing a food preparation or a food mixture containing proteins ready for cooking or baking;
b) Adding a microalgal material to the said food preparation or food mixture ready for cooking or baking not more than 15 minutes before baking or cooking to obtain a microalgal food preparation or a microalgal food mixture;
c) Cooking or baking said microalgal food preparation or a microalgal food mixture to obtain a high-protein food cooked or baked product comprising microalgae.

Disclosed herein, according to a second aspect of the invention, is a process for manufacturing a high-protein dry food rehydratable mix comprising microalgae, wherein said process comprises the steps of:
i) adding a microalgal material to a high-protein dry food mix (already cooked or raw) under an atmosphere comprising less than about 48% moisture, such as less than 40%, typically less than 20-30%, in particular less than 10-20%, such as less than 1-10% moisture to obtain a microalgal dry food rehydratable mix; and
ii) conditioning that microalgal dry food rehydratable mix in a moisture free package.

Disclosed herein, according to a further aspect of the invention, is a high-protein dry food rehydratable mix comprising microalgae.

Disclosed herein, according to a further aspect of the invention, is a meal kit for cooking or baking comprising at least two separate items, characterized in that one of the items comprises a high-protein dry food rehydratable mix and a second item consists in a microalgae material, both items being conditioned in a sealed and moisture-free atmosphere comprising less than 48% humidity, such as less than 40%, such as less than 40%, typically less than 20-30%, in particular less than 10-20%, such as less than 1-10% moisture. Disclosed herein, according to a further aspect of the invention, is a baked or cooked high-protein food product obtainable from a process or meal kit for cooking or baking according to the invention.

The invention is based on the unexpected finding that taste and texture (crunchiness) of high protein dry food products such as snack and/or biscuits/cookies or dehydrated food preparations ready for cooking such as dehydrated soup preparations can be significantly improved by adding the microalgae material less than 15 min prior to heating the food mass. Since the microalgae cell walls encapsulate the microalgae protein, the microalgae cells do not interfere with the rest of the mass keeping the snacks and biscuits crunchy.

Other features and advantages of the invention will be apparent from the claims, detailed description, and figures.

### Description of the figures

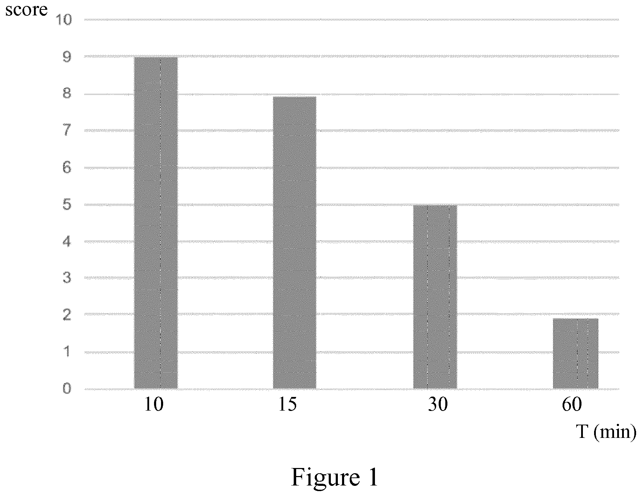

**Figure 1** shows the results of organoleptic test performed on 30-day cookies prepared by a method of the invention as described in Example 1 (Test score vs time (T) of adding micro algae prior to heating).

### Detailed description

The expressions "dry food", "dry food composition" mean any food intended to be ingested by humans or animals as a source of nutrition and/or calories wherein water content has been removed or reduced to about less than 10%, in particular less than 5%. Examples of dry food include but are not limited to lyophilized/freezed dried products which are rehydratable (e.g. soups, bouillon cube, portable soup) with water or any other suitable liquid, dried food compositions that generally comprise a structured protein product along with other macronutrients and micronutrients and others such as bakery products, ready for being cooked or baked.

The expression "cooked or baked product", includes snacks, cookies/biscuits, pasta, bread, candies, power bars and the like.

The expression "source of protein" food product refers to a food product having at least 12 % of calorie intake coming from protein, of which at least 50% are microalgal proteins.

The expression "high protein" refers to contents in proteins of at least 20% of calorie intake coming from protein, of which at least 50 % are microalgal proteins.

"Microalgae" refers to eukaryotic microbial organisms that contain a chloroplast or other plastid and is capable of performing photosynthesis.

The expression "microalgal material" includes both a migroalgal powder (dried microalgae without further treatment) and migroalgal flour (lysed microalgae) such as described in WO 2010/045368.

Microalgal material according to the invention can be obtained from the genus *Chlorella,* species such as *Chlorella protothecoides*, *Chlorella ellipsoidea*, *Chlorella minutissima*, *Chlorella zofinienesi*, *Chlorella luteoviridis*, *Chlorella kessleri*, *Chlorella sorokiniana*, *Chlorella fusca var. vacuolata Chlorella sp.*, *Chlorella cf. minutissima* or *Chlorella emersonii.*

Other species of *Chlorella* can be selected from the group consisting of *anitrata, Antartica, aureoviridis*, *candida*, *capsulate*, *desiccate*, *ellipsoidea* (including strain CCAP 211/42), *emersonii*, *fusca* (including *var. vacuolata*), *glucotropha*, *infusionum* (including *var. actophila* and *var. auxenophila*), *kessleri* (including any of UTEX strains 397,2229,398), *lobophora* (including strain SAG 37.88), *luteoviridis* (including strain SAG 2203 and *var. aureoviridis and lutescens*), *miniata*, *cf. minutissima*, *minutissima* (including UTEX strain 2341), *mutabilis*, *nocturna*, *ovalis*, *parva*, *photophila*, *pringsheimii*, *protothecoides* (including any of UTEX strains 1806, 411 , 264, 256, 255, 250, 249, 31, 29, 25 or CCAP 211/8D, or CCAP 211/17 and *var. acidicola*), *regularis* (including *var. minima*, and *umbricata*), *reisiglii* (including strain CCP 11/8), *saccharophila* (including strain CCAP 211/31, CCAP 211/32 and *var. ellipsoidea*), *salina*, *simplex*, *sorokiniana* (including strain SAG 211.40B), *sp.* (including UTEX strain 2068 and CCAP 211/92), *sphaerica*, *stigmatophora*, *trebouxioides*, *vanniellii*, *vulgaris* (including strains CCAP 211/1 IK, CCAP 211/80 and *f.tertia* and *var. autotrophica*, *viridis*, *vulgaris*, *vulgaris f*. *tertia*, *vulgaris f. viridis*), *xanthella*, and *zofingiensis.*

In addition to Chlorella, other genera of microalgae can also be used, such as selected from the group consisting *Parachlorella kessleri, Parachlorella beijerinckii, Neochloris oleabundans, Bracteacoccus,* including *B. grandis, B. cinnabarinas,* and *B. aerius, Bracteococcus sp.* or *Scenedesmus rebescens.* Other non-limiting examples of microalgae species include those species from the group of species and genera consisting of *Achnanthes orientalis, Agmenellum, Amphiprora hyaline, Amphora,* including *A coffeiformis* including *A.c. linea, A.c. punctata, A.c. taylori, A.c. tenuis, A.c. delicatissima, A.c. delicatissima capitata, Anabaena, Ankistrodesmus,* including *A. falcatus, Boekelovia hooglandii, Borodinella, Botryococcus braunii,* including *B. sudeticus, Bracteoccocus,* including *B. aerius, B. grandis, B. cinnabarinas, B. minor* and *B. medionucleatus, Carteria, Chaetoceros,* including *C*. *gracilis, C. muelleri* and *C*. *muelleri subsalsum, Chlorococcum,* including *C*. *infusionum, Chlorogonium, Chroomonas, Chrysosphaera, Cricosphaera, Crypthecodinium cohnii, Cryptomonas, Cyclotella,* including *C*. *cryptica and C. meneghiniana, Dunaliella,* including *D. bardawil, D. bioculata, D. granulate, D. maritime, D. minuta, D. parva, D. peircei, D. primolecta, D. salina, D. terricola, D. tertiolecta* and *D. viridi, Eremosphaera,* including *E. viridis, Ellipsoidon, Euglena, Franceia, Fragilaria,* including *F. crotonensis, Gleocapsa, Gloeothamnion, Hymenomonas, Isochrysis* including *I. aff. galbana and I. galbana, Lepocinclis, Micractinium* (including UTEX LB 2614), *Monoraphidium* including *M. minutum, Monoraphidium, Nannochloris, Nannochloropsis* including *N. salina, Navicula* including *N. acceptata, N. biskanterae, N. pseudotenelloides, N. pelliculosa* and *N. saprophila, Neochloris oleabundans, Nephrochloris, Nephroselmis, Nitschia communis, Nitzschia* including *N. alexandrina, N. communis, N. dissipata, N*.*frustulum*, *N. hantzschiana, N. inconspicua, N. intermedia, N. microcephala, N. pusilla, N. pusilla elliptica, N. pusilla monoensis,* and *N. quadrangular, Ochromonas, Oocystis* including *O*. *parva and O*. *pusilla; Oscillatoria* including *O*. *limnetica* and *O*. *subbrevis, Parachlorella* including *P. beijerinckii* (including strain SAG 2046) *and P. kessleri* (including any of SAG strains 11.80, 14.82, 21.11H9), *Pascheria* including *P. acidophila, Pavlova, Phagus, Phormidium, Platymonas, Pleurochrysis* including *P. carterae* and *P. dentate, Prototheca* including *P. stagnora* (including UTEX 327), *P. portoricensis* and *P. moriformis* (including UTEX strains 1441,1435, 1436, 1437, 1439), *Pseudochlorella aquatic, Pyramimonas, Pyrobotrys, Rhodococcus opacus, Sarcinoid chrysophyte, Scenedesmus* including *S. armatus* and S. *rubescens, Schizochytrium, Spirogyra, Spirulina platensis, Stichococcus, Synechococcus, Tetraedron, Tetraselmis* including *T. suecica, Thalassiosira weissflogii* and *Viridiella fridericiana.*

The microalgal biomass which can be used to obtain the microalgal material can be produced according to the methods described in WO 2010/045368 and WO 2010/120923. In these methods, the microalgae are fermented under heterotrophic conditions and so lack or have a significantly reduced amount of green pigment. Microalgae can grow in heterotrophic conditions where the carbon source is a fixed carbon source and in the absence of light, the normally green colored microalgae has a yellow color, lacking or is significantly reduced in green pigmentation. One advantage of microalgae of reduced (or is lacking) in green pigmentation is that the microalgae has a reduced chlorophyll flavor. Another advantage of microalgae of reduced (or is lacking in) green pigmentation is that as a food ingredient, the addition of the microalgae to foodstuffs will not impart a green color that can be unappealing to the consumer. Even with reduced green pigments, heterotrophically grown microalgae is a yellow color and this may be unsuitable for some food applications where the consumer expects the color of the foodstuff to be white or light in color. Another method for generating microalgae strain lacking in or having significantly reduced pigmentation is through mutagenesis and then screening for the desired phenotype. Several methods of mutagenesis such mutagenesis by UV irradiation or chemical mutagenesis (ethyl methanesulfonate (EMS) or N-methyl-N'nitro-N-nitroguanidine (NTG)) can be employed in order to generate microalgae with reduced (or lacking in) pigmentation.

Therefore, the microalgal material can be non-green such as yellow, or yellow-white or optionally white or yellow-white (due to the microalgae mutation).

To prepare the biomass for use as a food composition, the biomass is concentrated, or harvested, from the fermentation medium. To concentrate the biomass, a dewatering step is performed such as centrifugation, filtration, and the use of mechanical pressure.

The concentrated microalgal biomass is itself a finished food ingredient and may be used in foodstuffs without further, or with only minimal, modification. Alternatively, after concentration, microalgal biomass can be processed to produce microalgal protein vacuum-packed cake, algal flakes, algal homogenate, algal powder, algal flour, or algal oil. Microalgal powder can be prepared from concentrated microalgal biomass using a pneumatic or spray dryer. In a spray dryer, material in a liquid suspension is sprayed in a fine-droplet-dispersion into a current of heated air. The entrained material is rapidly dried and forms a dry powder. Pneumatic dryers draw or entrain the material that is to be dried in a stream of hot air.

Microalgal flour can be prepared from concentrated microalgal biomass that has been mechanically lysed and homogenized and the homogenate spray or flash dried (or dried using another pneumatic drying system).

The term "high-protein microalgae material" refers to microalgae material containing a high algal protein content which can be obtained by controlling the environmental parameters of the growth medium according to known procedures for increasing the protein content of algal material such as starvation conditions. Those methods are well-known in the art (e.g. Van Thang Duong et al., 2015, Front Bioeng Biotechnol, 3: 53). According to a particular aspect, a high protein microalgae material according to the invention is a microalgae material containing at least 60% of microalgae protein. An example of high-protein microalgae material is an Algal protein powder containing about 63% of microalgae protein or more. Food texture and taste can be evaluated by organoleptic testing which is a subjective evaluation of the flavor and texture of a food product. Sensory descriptors of food texture may include springiness, compressibility, softness, cohesiveness, wetness, roughness, cohesiveness-of-mass, chewiness, chew-count, and powdery. In addition, texture of food can be measured by using specialized equipment (instrumental), wherein various parameters can be tested and evaluated in relation to food texture. The food texture can be tested by measurement of compression, tension and flexure used to measure hardness, crispiness, crunchiness, softness, springiness, tackiness, and other properties of food.

For example in texture profile analysis ("Two Bite Test") measurements are made by compressing an item to a set distance and analyzing the force it takes for the item to deform. This action mimics chewing and creates the force deformation curve. The force of the first bite and the force of the second bite are measured against the amount of deformation of the food sample for analysis. The primary categories for texture profile analysis can be described as hardness (the initial force used to deform), cohesiveness (how the item holds together), viscosity (flow rate), elasticity or springiness (the rate at which a deformed item reforms) and adhesiveness (rate at which item comes away from probe (instrumental) or roof of mouth/teeth (organoleptic)). The primary categories can be further broken down into secondary categories such as resilience (measurement of how a sample recovers from deformation in relation to speed and forces derived), brittleness or fracturability (the initial force needed for a material to fracture), chewiness (energy required to chew a solid food until it is ready for swallowing) and gumminess (energy required to disintegrate a semisolid food until it is ready to swallow). The primary and secondary categories may be further broken down as needed to define the characteristics in a specific food item.

According to another aspect, sensory and rheological methodology as described in Wendin et al., 2010, Food Nutr Res., 54: 10, might be used to characterize textures of food products of the invention as compared to products made by known methods.

According to one example, the texture of a solid or dry food product (e.g. a cookie) can be quantified in terms of stiffness (a measure of stress vs. deformation) and plasticity (a measure of the tendency of the cookie crumb). The food product of high stiffness/low plasticity is described as crisp and of low stiffness/high plasticity is chewy. Typically, a solid food product is considered as being crispy if the force-displacement curve is a short linear relationship before a sudden structural breakdown. Typically, for those types of products, the deformation is between 10% and 20% of the force (stress) (determined by the area under the force line).

A solid or semi-solid food product is considered as being chewy/gummy (energy needed to chew a solid food until it is ready for swallowing/energy needed to disintegrate a semisolid food until it is ready to swallow) when the deformation is 40% of the force or higher as measured by Texture Profile Analysis (TPA) such as described in Davies 2014, "Measurement of crispness in food product using acoustic-mechanical techniques: a literature review"; Modifying food structure, Woodhead publishing Series in Food Science, Technology and Nutrition, volume 1, Ed. Chen and Rosenthal, 2015, Elsevier Ltd, Cambridge*.*

### Methods according to the invention

According to a particular aspect of the invention, is provided a method for production of a high-protein food cooked or baked product comprising microalgae according to the invention, wherein the microalgal material is added to the said food preparation or food mixture ready for cooking or baking such that the algae content of the obtained microalgal food mixture is about 8% to about 26% (e.g. about 10 to 15 %, typically from about 10-12%) by dry weight of the obtained high-protein food cooked or baked product.

According to a particular aspect of the invention, the microalgal material is a high-protein microalgae material.

According to a particular aspect of the invention, the microalgal material is a microalgal powder.

According to a particular aspect of the invention, the microalgal material is a non-green, or yellow, or yellow-white *Chlorella* microalgal material.

According to a particular aspect of the invention, the microalgal material is *a Chlorella protothecoides* microalgal material, such as Golden Chlorella™.

According to a particular aspect of the invention, is provided a method for production of a high-protein food cooked or baked product comprising microalgae according to the invention, wherein the cooking or baking of said microalgal food preparation or microalgal food mixture is carried out at a temperature between about 100 and 150°C, typically around 120°C. According to a particular aspect of the invention, is provided a method for production of a high-protein food cooked or baked product comprising microalgae according to the invention, wherein the microalgal material is added less than 10 minutes before cooking or baking said microalgal food preparation or microalgal food mixture.

According to another particular aspect of the invention, is provided a process for manufacturing a high-protein dry food rehydratable mix comprising microalgae, wherein the said microalgal dry food rehydratable mix contains about 8% to about 26% (e.g. about 10 to 15 %, typically from about 10-12%) by dry weight of the obtained high-protein dry food rehydratable mix comprising microalgae.

According to another particular aspect of the invention, is provided a method or process according to the invention wherein the obtained cooked or baked product or dry food rehydratable mix contains at least 12% calories coming from proteins.

### Food products according to the invention

According to another particular aspect of the invention, is provided a meal kit for cooking or baking comprising at least two separate items, characterized in that one of the items comprises a protein dry food rehydratable mix and a second item consists in a microalgae material, both items being conditioned in a sealed and moisture-free atmosphere comprising less than 48% moisture, such as less than 40%, typically less than 20-30%, in particular less than 10-20%, such as less than 1-10% moisture.

According to another particular aspect of the invention, is provided a meal kit for cooking or baking according to the invention, wherein said meal kit is selected from a soup kit, a sauce kit, a baking kit (e.g. for cookies, bread, cakes, biscuits), a full meal kit.

According to another particular aspect of the invention, is provided a meal kit for cooking or baking according to the invention, wherein said meal kit contains a microalgae material, conditioned in a sealed and moisture-free atmosphere such that the microalgae material represents an amount necessary to represent from about 8% to about 26% (e.g. about 10 to 15 %, typically from about 10-12%) by dry weight of the baked or cooked high-protein food product obtainable from the meal kit.

According to another particular aspect of the invention, is provided a protein dry food rehydratable mix comprising microalgae, wherein the microalgae accounts for from about 5 about 8% to about 26% (e.g. about 10 to 15 %, typically from about 10-12%) by dry weight of the high-protein dry food rehydratable mix.

According to another particular aspect of the invention, is provided a solid baked or cooked protein food product comprising microalgae, wherein the microalgae accounts for from about about 8% to about 26% (e.g. about 10 to 15 %, typically from about 10-12%) by dry weight of the high-protein dry food, wherein said product is non chewy.

According to another particular aspect of the invention, is provided a baked or cooked high-protein food product obtainable from a method, a process or from a meal kit according to the invention, in particular a rehydrated soup or sauce, a cookie, bread, cake, biscuits or a full meal.

According to another particular aspect of the invention, is provided a baked or cooked high-protein food product according to the invention having a non chewy texture.

According to another particular aspect of the invention, is provided a cooked protein food product according to the invention has a measured viscosity analysis such as by a rotational viscometer like a RVA (Rapid Visco Analyser) is less than 400 cP at less than 36°C.

According to another particular aspect of the invention, is provided a baked protein food product having a shelf-life or at least 6-months (i.e. wherein its texture and organoleptic properties remain unchanged when stored in a normal atmospheric moisture environment, typically lower than 40% humidity).

Examples illustrating the invention will be described hereinafter in a more detailed manner and by reference to the embodiments represented in the Figure.

### EXAMPLES

### Example 1: Production of high protein dry food comprising microalgae

The method according to the invention can be used for the preparation of cookies.

### Powder comprising Chlorella microalgae (Golden Chlorella™)

A high protein microalgal material comprising dried *Chlorella protothecoides* (microalgal powder) prepared according to WO 2010/045368 and WO 2010/120923 was provided which contains about 63% of protein as well as fibers, micronutrients, unsaturated lipids and essential amino acids: Algal protein powder (Terravia, USA) which is 100% natural, 100% vegan, gluten free, lactose free, and has no genetically modified organisms (GMO) was provided. The powder has neither the color nor the taste of algae. The composition of the powder is presented in **Tables 1** (macrocomposition) and **2** (microcomposition).

**Table 1**

| **Ingredient** | **% of weight** |
|---|---|
| Protein | 63 |
| Lipids | 11 |
| (of which unsaturated lipids) | (8.6) |
| Carbohydrates | 19 |
| Ash | 4 |
| Moisture | 3 |

**Table 2**

| **Ingredient** | **mass in 100 g of the powder** |
|---|---|
| **Minerals** | |
| Calcium (Ca) | 76 mg |
| Phosphorus (P) | 663 mg |
| Sodium (Na) | 640 mg |
| Potassium (K) | 776 mg |
| Magnesium (Mg) | 176 mg |
| Iron (Fe) | 2 mg |
| Zinc (Zn) | 8 mg |
| Selenium (Se) | <0.1 mg |

| **Vitamins** | |
|---|---|
| A | <0.5 µg |
| K1 | 4.1 µg |
| B1 | 0.6 mg |
| B2 | 4.9 mg |
| B3 | 2.7 mg |
| B6 | 0.5 mg |
| C | 0.9 mg |
| E | 2.7 mg |

The microalgal material contains aminoacids such as Arginine known to improve immune function, increase muscle mass and energy levels, reduce cardiovascular problems, contribute to good sexual function, and to help reduce both size and amount of fat cells, glutamic acid known as a neurotransmitter which helps to improve learning and memory and is beneficial for children development and the two carotenoids, lutein and zeaxanthin, having a positive effect on the resilience of the eyes and are antioxidants that counteract the accumulation of fat cells in the arteries. Unsaturated lipids are also present in the microalgal material which helps detoxify the body, increase blood circulation, and stimulate metabolism, which is helpful for weight loss.

### Preparation of protein cookies

The ingredients of Table 3 are mixed together except the high protein microalgal material as described above which is added to the mixture about 5 minutes prior to the heating of the mixture mass. The mass is then heated at a temperature of about 120°C.

Since the microalgae cell walls encapsulate the microalgae protein, the microalgae cells do not interfere with the rest of the mass, keeping the resulting biscuits crunchy, as long as the microalgal material is in contact with the mixture less than about 15 minutes.

The lipid material can be butter but also any other source of lipid, in particular lactose-free lipid source, such as for example high-lipid algae material which can be obtained by standard culture conditions known to enrich algal material in lipids (*Van Thang Duong et al., 2015, supra*)*.*

**Table 3**

| **Ingredients Chocolate cookie** | **g** | **Proteins (g/kcal)** | **Lipids (g/kcal)** | **AGS (g)** | **Carbohydrates (g/kcal)** | **Sugar (g)** | **Fibres (g/kcal)** | **Salt (g)** | **Energy (kcal/kJ)** |
|---|---|---|---|---|---|---|---|---|---|
| Whole egg | 60 | 7.5/30 | 6.3/56.7 | 1.86 | 0.18/0.72 | 0.18 | 0/0 | 0.198 | 87/367 |
| Brown sugar | 70 | 0/0 | 0/0 | 0 | 70/280 | 70 | 0/0 | 0 | 280/1176 |
| margarine | 0 | 0/0 | 0/0 | 0 | 0/0 | 0 | 0/0 | 0 | 0/0 |
| Lipid material | 20 | 1.8/7.2 | 9.2/82.8 | 1.72 | 4/16 | 1.6 | 3.8/7.6 | 0.284 | 114/477 |
| baking powder | 2 | 0.002/0.008 | 0/0 | 0 | 0.428/1.712 | | 0/0 | 0.895 | 2/7 |
| corn flour | 100 | 4.6/18.4 | 1.6/14.4 | 0.3 | 76.4/305.6 | 0.6 | 2.6/5.2 | 0 | 344/1443 |
| high-protein microalgae material | 46 | 28.98/115.92 | 5.06/45.54 | 1.15 | 8.74/34.96 | 2.07 | 0/0 | 0.736 | 196/825 |
| salt | 2 | 0/0 | 0/0 | 0 | 0/0 | 0 | 0/0 | 2 | 0/0 |
| rice flour | 80 | 5.76/23.04 | 2.24/20.16 | 0.48 | 57.52/230.08 | 0.32 | 3.68/7.3 6 | 0.016 | 281/1179 |
| Pieces of chocolate 70% cocoa | 100 | 8.8/35.2 | 41.9/377.1 | 25.6 | 35.6/142.4 | 30.1 | 5.9/11.8 | 0.02 | 567/2379 |
| TOTAL | 480 | 57.4/229.8 | 66.3/596.7 | 31.1 | 252.9/1011.5 | 104.9 | 15.98/3 2.0 | 4.1 | 1870/7854 |
| in 100 g | 100 | 12.0/47.9 | 13.8/124.3 | 6.5 | 52.7/210.7 | 21.8 | 3.3/6.7 | 0.9 | 390/1636 |

| | | | | | | | | | |
|---|---|---|---|---|---|---|---|---|---|
| *The cookies do not contain lactose.* *AGS: Fatty acids saturated* | | | | | | | | | |

The properties of the resulting cookies were assessed in an organoleptic test as follows:
10 subjects tasted 30-day cookies prepared as described above, wherein the time of adding microalgae flour was 10 min, 15 min, 30 min (comparative food product1, not part of the invention) or 60 min (comparative food product2, not part of the invention) prior to heating of cookie mass. The cookies were assessed in terms of their taste, texture (crunchiness) and mouth feel and were scored on a scale from 0 to 10, wherein 0 indicates lack of crunchiness (high viscosity and chewiness) and 10 indicates very good crunchiness and mouth feel (Figure 1). The results show that when the microalgal material is added to the cookie mixture less or equal to 15 min before heating, the obtained cookies are marked with a score of 9 and 8 (averaged score over the 10 subjects), respectively in the organoleptic test, whereas the microalgal material is added more than than 15 minutes, namely 30 min or 60 min before baking, the resulting score was significantly lower (5 and 2, respectively).

Therefore, the timing of mixing of adding the algal material to the baking mass before cooking is crucial to the process of manufacture of dry food product in order to obtain tasteful food textures and avoiding chewiness of food products and increase their shelf-life which is tested until 6 months.

## Claims

1. A method for production of a high-protein food cooked or baked product comprising microalgae, wherein said method comprises the following steps:
a) Providing a food preparation or a food mixture containing proteins ready for cooking or baking;
b) Adding a microalgal material to the said food preparation or food mixture ready for cooking or baking not more than 15 minutes before baking or cooking to obtain a microalgal food preparation or a microalgal food mixture;
c) Cooking or baking said microalgal food preparation or a microalgal food mixture to obtain a high-protein food cooked or baked product comprising microalgae.

2. A method according to claim 1 wherein the microalgal material added to the said food preparation or food mixture ready for cooking or baking under step b) is such that the protein algae content of the obtained microalgal food mixture is from about 8% to about 26% by dry weight of the obtained high-protein food cooked or baked product.

3. A method according to claim 1 or 2, wherein the high-protein microalgal material contains 60% of algal protein or higher.

4. A method according to any one of claims 1 to 3, wherein the microalgal material is a non-green, or yellow, or yellow-white *Chlorella* microalgal material.

5. A method according to any one of claims 1 to 4, wherein the microalgal material is a *Chlorella protothecoides* microalgal material.

6. A method according to any one of claims 1 to 5, wherein the microalgal material is added under step b) less than 10 min before cooking or baking said microalgal food preparation or a microalgal food mixture.

7. A method according to any one of claims 1 to 6, wherein the cooking or baking of said microalgal food preparation or microalgal food mixture under step c) is carried out at a temperature between about 100 and 150°C, typically around 120°C.

8. A process for manufacturing a high-protein dry food rehydratable mix comprising microalgae, wherein said process comprises the steps of :
i) adding a microalgal material to a protein dry food mix (already cooked or raw) under an atmosphere comprising less than 40% to obtain a microalgal dry food rehydratable mix; and
ii) conditioning that microalgal dry food rehydratable mix in a moisture free package.

9. A process according to claim 8 wherein the said microalgal dry food rehydratable mix contains from about 8% to about 26% microalgae protein by dry weight of the obtained high-protein dry food rehydratable mix comprising microalgae.

10. A method according to any one of claims 1 to 7 or a process according claims 8 or 9, wherein the obtained cooked or baked product or dry food rehydratable mix contains at least 12% calories coming from proteins.

11. A high-protein dry food rehydratable mix comprising microalgae proteins, wherein the microalgae protein accounts for from about 8% to about 26% by dry weight of the high-protein dry food rehydratable mix.

12. A meal kit for cooking or baking comprising at least two separate items, **characterized in that** one of the items comprises a high-protein dry food rehydratable mix and a second item consists in a microalgae material, both items being conditioned in a sealed and moisture-free atmosphere comprising less than 40% humidity.

13. A solid baked or cooked high-protein food product comprising microalgae proteins, wherein the microalgae protein accounts for from about 8% to about 26% by dry weight of the high-protein dry food, wherein said product is non chewy.

14. A baked or cooked high-protein food product obtainable from a method according to any one of claims 1 to 7 or from a meal kit according to claim 12.

15. A baked or cooked high-protein food product according to claim 14, wherein said product is solid and non-chewy.
